# EUROPEAN PATENT SPECIFICATION

(11) **EP 0 912 930 B1**
(45) Date of publication and mention of the grant of the patent: **23.08.2006**
(21) Application number: 96926089.2
(22) Date of filing: 16.07.1996
(51) Int. Cl.: G06F 9/38

(54) **A FUNCTIONAL UNIT WITH A POINTER FOR MISPREDICTED BRANCH RESOLUTION, AND A SUPERSCALAR MICROPROCESSOR EMPLOYING THE SAME**
FUNKTIONSEINHEIT MIT ZEIGER FÜR FALSCH VORHERGESAGTE VERZWEIGUNGSAUFLÖSUNG UND SUPERSKALARER MIKROPROZESSOR ZU DEREN ANWENDUNG
UNITE FONCTIONNELLE AVEC UN POINTEUR POUR LA RESOLUTION DE BRANCHEMENTS AVEC ERREUR DE PREDICTION, ET MICROPROCESSEUR SUPERSCALAIRE COMPRENANT UNE TELLE UNITE

(43) Date of publication of application: 06.05.1999
(73) Proprietor: ADVANCED MICRO DEVICES, INC., Austin, TX 78741 (US)
(72) Inventor: TRAN, Thang, M., Austin, TX 78730 (US)
(74) Representative: Brookes Batchellor LLP
(86) International application number: PCT/US1996/011841
(87) International publication number: WO 1998/002801

(56) References cited:
- EP-A- 0 661 625
- EP-A- 0 686 913
- WO-A-90/10267
- PROCEEDINGS OF THE SUPERCOMPUTING CONFERENCE, PORTLAND, NOV. 15 - 19, 1993, no. -, 15 November 1993, INSTITUTE OF ELECTRICAL AND ELECTRONICS ENGINEERS, pages 636-644, XP000437401 PICKETT J K ET AL: "ENHANCED SUPERSCALAR HARDWARE: THE SCHEDULE TABLE"
- IEEE MICRO, vol. 12, no. 2, 1 April 1992, pages 40-63, XP000266192 DIEFENDORFF K ET AL: "ORGANIZATION OF THE MOTOROLA 88110 SUPERSCALAR RISC MICROPROCESSOR"

## Description

### BACKGROUND OF THE INVENTION

### 1. Field of the Invention

This invention relates to the field of superscalar microprocessors and, more particularly, to branch misprediction recovery and load/store retirement.

### 2. Description of the Relevant Art

Superscalar microprocessors achieve high performance by executing multiple instructions simultaneously using the shortest possible clock cycle. As used herein, the term "clock cycle" refers to the interval of time that a superscalar microprocessor requires to complete the various tasks employed within its pipeline (for example, the processing of instructions). Two features important to high performing superscalar microprocessors are branch prediction and out-of-order execution.

Branch prediction is the process of speculatively selecting the direction that a branch instruction will select before the branch instruction is executed. Microprocessors execute instructions sequentially: when a first instruction is executed, the second instruction to be executed is the instruction stored in memory adjacent to the first instruction. Branch instructions, however may cause the next instruction to be executed to be either the next sequential instruction, or alternatively an instruction which resides in another memory location that is specified by the branch instruction. The memory location specified by the branch instruction is typically referred to as the "target" of the branch. Which of the instructions is selected for execution typically depends on a condition that the branch instruction tests. An exemplary tested condition is the value stored in a register, wherein the branch target is selected if the register contains zero and the next sequential instruction is selected if the register does not contain zero. It is noted that some branch instructions do not test a condition. Unconditional branches always select the target path, and typically no instructions are specifically encoded into the next sequential memory locations.

Branches occur relatively frequently in computer programs. In order to continue executing large numbers of instructions simultaneously, superscalar microprocessors predict which direction (or which "path") each branch instruction will select: next sequential or target. The microprocessor then speculatively executes instructions residing on the predicted path. If the superscalar microprocessor "mispredicts" the path that a branch instruction selects, the speculatively executed results are discarded and the correct path is fetched and executed. Various branch prediction mechanisms are well-known.

Because branch instruction mispredictions occur, a misprediction recovery mechanism is necessary. A misprediction recovery mechanism is a mechanism which causes the corrected fetch address to be fetched from the cache and the associated instructions to be dispatched to the instruction processing pipelines. The corrected fetch address is the address generated by the branch instruction for locating the next instruction to be executed. The misprediction recovery mechanism is required to complete in relatively few clock cycles, so that correct instructions are executed soon after the misprediction is determined. Typically, the clock cycles between the clock cycle in which the misprediction is discovered and the clock cycle in which the corrected instructions begin execution are idle cycles. Overall performance of the superscalar microprocessor is degraded by the number of idle cycles it must endure.

Superscalar microprocessors are evolving such that they execute larger and larger numbers of instructions simultaneously. However, branch instructions continue to occur in programs with the same frequency. Therefore, superscalar microprocessors are implementing branch prediction schemes in which multiple branch predictions may be outstanding in a given clock cycle (i.e. multiple branch paths have been predicted, but have not been validated by the execution of the associated branch). With the possibility of multiple branch instructions executing in a given clock cycle, and therefore multiple mispredictions being detected, the misprediction recovery mechanism becomes more complex. However, the importance of the misprediction recovery mechanism completing in relatively few clock cycles is not diminished. A misprediction recovery mechanism which requires relatively few clock cycles to complete and that can correctly resolve multiple branch mispredictions is desired.

Along with branch prediction, another feature intended to improve the performance of superscalar microprocessors is out-of-order execution. Out-of-order execution is the process of executing a particular instruction in a clock cycle that is before a clock cycle in which instructions which are before the particular instruction in program order are executed. An instruction which does not depend on the results generated by the instructions before it in program order need not delay its execution until the instructions before it execute. Because the instruction must be executed at some time, performance is advantageously increased by executing the instruction in a pipeline stage that would otherwise be idle in a clock cycle.

Unfortunately, certain instructions cannot be executed out-of-order. Programs assume that instructions are executed in-order, and therefore out-of-order execution must be employed in a manner which is transparent to programs. Exemplary instructions that cannot be executed out-of-order are load instructions that miss the data cache and store instructions. Store instructions modify memory, as opposed to other instructions which modify registers. If the store instruction is allowed to modify the data cache out-of-order and is then cancelled due to a previous branch misprediction or an interrupt, then the data cache would contain corrupted data. Therefore, the store instruction must not be allowed to modify the data cache or main memory until previous instructions have executed, so that the store instruction is not going to be cancelled. Load instructions that miss the data cache cannot be executed out-of-order either, as will be discussed below.

Data caches are implemented either on the same silicon substrate as a superscalar microprocessor, or are coupled nearby. The data cache is a high speed memory which is configured to store copies of a main system memory (when employed in a computer system). When a load or store instruction accesses the data cache, the access is found to be either a "hit" or a "miss". If an access is a hit, then the associated data is currently stored in the data cache. If the access is a miss, the associated data is in main memory. Load instructions are allowed to execute out-of-order when reading the data cache. However, when load instructions miss the data cache they are required to execute in order. Otherwise, a load miss may begin a transfer from main memory and then be cancelled. The external bus bandwidth used by the access would then be wasted. Furthermore, the data being transferred may cause a line to be removed from the cache. If that removed line is later needed, it will have to be transferred in from main memory and more external bus bandwidth would be wasted. Therefore, load instructions that are data cache misses should not execute out of order. A mechanism is needed to correctly order load instructions that are data cache misses and store instructions.

WO 90/10267 describes a pipeline control system which is distributed over functional units in a processor. Decoder logic issues operations, each with an associated tag, to the functional units, with up to n operations allowed to be outstanding. The units execute the operations and report termination information back to the decoder logic, but do not irrevocably change the state of the machine. Based on the termination information, the decoder logic retires normally terminated operations in order. If an operation terminates abnormally, the decoder logic instructs the units to back out of those operations that include and are later than the operation that terminated abnormally.

EP- 0 686 913 discloses a superscalar microprocessor with a reorder buffer for storing the speculative state of the microprocessor and a register file for storing the real state of the microprocessor. A flags register stores the real state of flags that are updated by flag modifying instructions which are executed by the functional units of the microprocessor. To enhance the performance of the microprocessor with respect to conditional branching instructions, the reorder buffer includes a flag storage area for storing flags that are updated by flag modifying instructions. The flags are renamed to make possible the earlier execution of branch instructions which depend on flag modifying instructions. If a flag is not yet determined, then a flag tag is associated with the flag storage area in place of that flag until the actual flag value is determined. A flag operand bus and flag tag bus are provided between the flag storage area and the branching functional unit so that the requested flag or flag tags are provided to instructions which are executed in the branching functional unit.

The present invention at least in part solves the above problems and comprises a superscalar microprocessor comprising:
a reorder buffer, a branch prediction unit, and a plurality of functional units configured to execute instructions and wherein at least one of said plurality of functional units is configured to execute branch instructions, *characterized in that:*
   said reorder buffer is configured to generate a pointer identifying an oldest outstanding branch instruction; and
   said plurality of functional units are coupled to said reorder buffer and said branch prediction unit, wherein each of said plurality of functional units is configured to receive said pointer, and wherein said each of said plurality of functional units is configured to convey a corrected fetch address to said branch prediction unit responsive to said pointer.

We shall describe a superscalar microprocessor employing a plurality of functional units, a load/store unit, and a reorder buffer in accordance with the present invention. The functional units receive a pointer (a reorder buffer tag) which is compared to the reorder buffer tags of the instructions currently being executed. The pointer identifies the oldest outstanding branch instruction. If a functional unit's reorder buffer tag matches the pointer, then that functional unit conveys its corrected fetch address to the instruction fetching mechanism of the superscalar microprocessor (i.e. the branch prediction unit).

Because the functional units convey the corrected fetch address directly to the instruction fetching mechanism, clock cycles are advantageously removed from the branch misprediction recovery mechanism. Without functional units of the present invention, corrected fetch addresses would be reported to the reorder buffer in the same way that other instruction execution results are reported. The reorder buffer would then be required to scan the branch instructions stored within it for a mispredicted branch and then convey the corrected fetch address to the instruction fetching mechanism. This conventional mechanism requires at least one clock cycle more than that of the present invention, and for high frequency (short clock cycle) superscalar microprocessors more than one extra clock cycle may be required. A superscalar microprocessor in accordance with the present invention may enable higher performance by reducing the number of idle clock cycles associated with mispredicted branch instructions.

In one embodiment, the load/store unit receives a pair of pointers which identify the oldest outstanding instructions which are not in condition for retirement. The load/store unit compares these pointers with the reorder buffer tags of load instructions that miss the data cache and store instructions. A match must be found before the associated instruction accesses the data cache and the main memory system. Because the pointers indicate the oldest outstanding instructions, the pointer-compare mechanism provides an ordering mechanism for load instructions that miss the data cache and store instructions.

The load/store ordering mechanism of the present invention advantageously provides ordering with minimum handshaking between the load/store unit and the reorder buffer. A pair of pointers are added to the communication signals that the load/store unit uses to indicate that instructions have completed. Fewer interface signals simplifies the design of both the load/store unit and the reorder buffer, but the required functions are provided without a degradation in performance.

Broadly speaking, the present invention contemplates a superscalar microprocessor comprising a plurality of functional units. Each of the functional units is configured to execute instructions, and at least one of the functional units is configured to execute branch instructions. Furthermore, each of the functional units is configured to receive a pointer capable of identifying an oldest outstanding branch instruction.

The present invention further contemplates a superscalar microprocessor comprising a plurality of functional units, a load/store unit, and a reorder buffer. Each of the functional units is configured to execute instructions, and at least one of the functional units is further configured to execute branch instructions. Each of the functional units is configured to receive a pointer capable of identifying an oldest outstanding instruction. The load/store unit is configured to execute load and store instructions, and also receives the pointer. The reorder buffer is configured to generate the pointer.

### BRIEF DESCRIPTION OF THE DRAWINGS

Other objects and advantages of the invention will become apparent upon reading the following detailed description and upon reference to the accompanying drawings in which:
Figure 1 is a block diagram of a superscalar microprocessor employing functional units, a load/store unit, and a reorder buffer in accordance with the present invention.
Figure 2 is a partial block diagram of a superscalar microprocessor showing functional units, a load/store unit, and a reorder buffer in more detail.
Figure 3A is a diagram of one of the functional units shown in Figure 2, depicting elements of an embodiment of the present invention.
Figure 3B is a diagram of the load/store unit in Figure 2, depicting elements of an embodiment of the present invention.
Figure 3C is a diagram of a tag routing device used as part of the branch detection and oldest outstanding detection blocks shown in Figure 2.
Figure 3D is a diagram of a typical reorder buffer entry of an embodiment of the present invention.

### DETAILED DESCRIPTION OF THE INVENTION

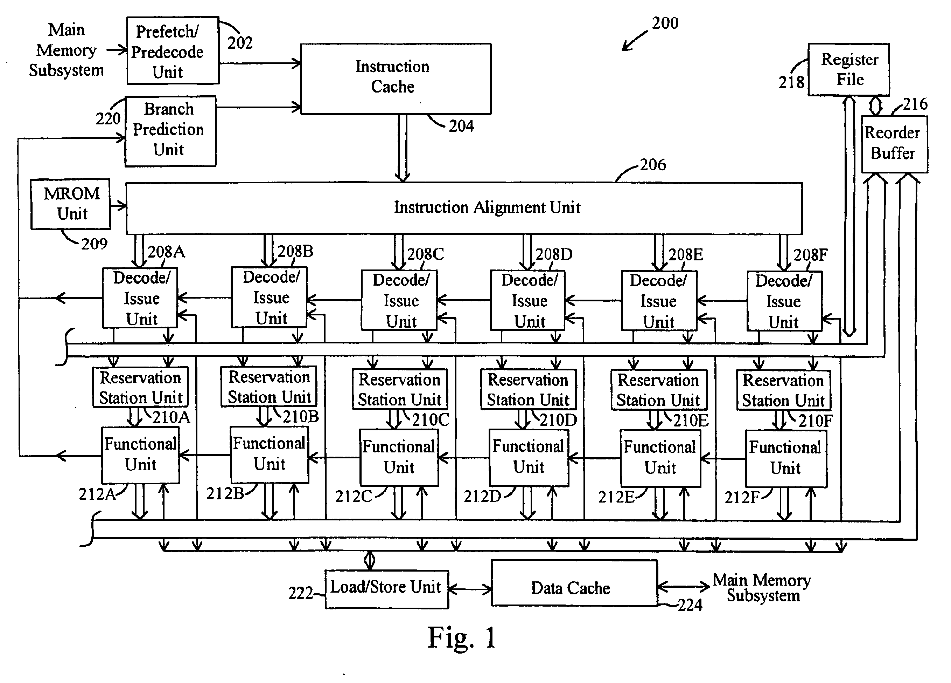

Turning now to the drawings, Figure 1 shows a block diagram of a superscalar microprocessor 200 including functional units 212A-212F, a load/store unit 222, and a reorder buffer 216 in accordance with the present invention. As illustrated in the embodiment of Figure 1, superscalar microprocessor 200 includes a prefetch/predecode unit 202 and a branch prediction unit 220 coupled to an instruction cache 204. Instruction alignment unit 206 is coupled between instruction cache 204 and a plurality of decode units 208A-208F (referred to collectively as decode units 208). Each decode unit 208A-208F is coupled to a respective reservation station unit 210A-210F (referred collectively as reservation stations 210), and each reservation station 210A-210F is coupled to a respective functional unit 212A-212F (referred to collectively as functional units 212). Decode units 208, reservation stations 210, and functional units 212 are further coupled to a reorder buffer 216, a register file 218 and a load/store unit 222. A data cache 224 is finally shown coupled to load/store unit 222, and an MROM unit 209 is shown coupled to instruction alignment unit 206.

Generally speaking, instruction cache 204 is a high speed cache memory provided to temporarily store instructions prior to their dispatch to decode units 208. In one embodiment, instruction cache 204 is configured to cache up to 32 kilobytes of instruction code organized in lines of 16 bytes each (where each byte consists of 8 bits). During operation, instruction code is provided to instruction cache 204 by prefetching code from a main memory (not shown) through prefetch/predecode unit 202. It is noted that instruction cache 204 could be implemented in a set-associative, a fully-associative, or a direct-mapped configuration.

Prefetch/predecode unit 202 is provided to prefetch instruction code from the main memory for storage within instruction cache 204. In one embodiment, prefetch/predecode unit 202 is configured to burst 64-bit wide code from the main memory into instruction cache 204. It is understood that a variety of specific code prefetching techniques and algorithms may be employed by prefetch/predecode unit 202.

As prefetch/predecode unit 202 fetches instructions from the main memory, it generates three predecode bits associated with each byte of instruction code: a start bit, an end bit, and a "functional" bit. The predecode bits form tags indicative of the boundaries of each instruction. The predecode tags may also convey additional information such as whether a given instruction can be decoded directly by decode units 208 or whether the instruction must be executed by invoking a microcode procedure controlled by MROM unit 209, as will be described in greater detail below.

Table I indicates one encoding of the predecode tags. As indicated within the table, if a given byte is the first byte of an instruction, the start bit for that byte is set. If the byte is the last byte of an instruction, the end bit for that byte is set. If a particular instruction cannot be directly decoded by the decode units 208, the functional bit associated with the first byte of the instruction is set. On the other hand, if the instruction can be directly decoded by the decode units 208, the functional bit associated with the first byte of the instruction is cleared. The functional bit for the second byte of a particular instruction is cleared if the opcode is the first byte, and is set if the opcode is the second byte. It is noted that in situations where the opcode is the second byte, the first byte is a prefix byte. The functional bit values for instruction byte numbers 3-8 indicate whether the byte is a MODRM or an SIB byte, as well as whether the byte contains displacement or immediate data.

**Table 1. Encoding of Start, End and Functional Bits**

| Instr. Byte Number | Start Bit Value | End Bit Value | Functional Bit Value | Meaning |
|---|---|---|---|---|
| 1 | 1 | X | 0 | Fast decode |
| 1 | 1 | X | 1 | MROM instr. |
| 2 | 0 | X | 0 | Opcode is first byte |
| 2 | 0 | X | 1 | Opcode is this byte, first byte is prefix |
| 3-8 | 0 | X | 0 | Mod R/M or SIB byte |
| 3-8 | 0 | X | 1 | Displacement or immediate data; the second functional bit set in bytes 3-8 indicates immediate data |
| 1-8 | X | 0 | X | Not last byte of instruction |
| 1-8 | X | 1 | X | Last byte of instruction |

As stated previously, in one embodiment certain instructions within the x86 instruction set may be directly decoded by decode units 208. These instructions are referred to as "fast path" instructions. The remaining instructions of the x86 instruction set are referred to as "MROM instructions". MROM instructions are executed by invoking MROM unit 209. When an MROM instruction is encountered, MROM unit 209 parses and serializes the instruction into a subset of defined fast path instructions to effectuate a desired operation. A listing of exemplary x86 instructions categorized as fast path instructions as well as a description of the manner of handling both fast path and MROM instructions will be provided further below.

Instruction alignment unit 206 is provided to channel variable byte length instructions from instruction cache 204 to fixed issue positions formed by decode units 208A-208F. Instruction alignment unit 206 is configured to channel instruction code to designated decode units 208A-208F depending upon the locations of the start bytes of instructions within a line as delineated by instruction cache 204. In one embodiment, the particular decode unit 208A-208F to which a given instruction may be dispatched is dependent upon both the location of the start byte of that instruction as well as the location of the previous instruction's start byte, if any. Instructions starting at certain byte locations may further be restricted for issue to only one predetermined issue position. Specific details follow.

Before proceeding with a detailed description of the functional units 212, load/store unit 222, and reorder buffer 216, general aspects regarding other subsystems employed within the exemplary superscalar microprocessor 200 of Figure 1 will be described. For the embodiment of Figure 1, each of the decode units 208 includes decoding circuitry for decoding the predetermined fast path instructions referred to above. In addition, each decode unit 208A-208F routes displacement and immediate data to a corresponding reservation station unit 210A-210F. Output signals from the decode units 208 include bit-encoded execution instructions for the functional units 212 as well as operand address information, immediate data and/or displacement data.

The superscalar microprocessor of Figure 1 supports out of order execution, and thus employs reorder buffer 216 to keep track of the original program sequence for register read and write operations, to implement register renaming, to allow for speculative instruction execution and branch misprediction recovery, and to facilitate precise exceptions. As will be appreciated by those of skill in the art, a temporary storage location within reorder buffer 216 is reserved upon decode of an instruction that involves the update of a register to thereby store speculative register states. Reorder buffer 216 may be implemented in a first-in-first-out configuration wherein speculative results move to the "bottom" of the buffer as they are validated and written to the register file, thus making room for new entries at the "top" of the buffer. Other specific configurations of reorder buffer 216 are also possible, as will be described further below. If a branch prediction is incorrect, the results of speculatively-executed instructions along the mispredicted path can be invalidated in the buffer before they are written to register file 218.

The bit-encoded execution of instructions and immediate data provided at the outputs of decode units 208A-208F are routed directly to respective reservation station units 210A-210F. In one embodiment, each reservation station unit 210A-210F is capable of holding instruction information (i.e., bit encoded execution bits as well as operand values, operand tags and/or immediate data) for up to three pending instructions awaiting issue to the corresponding functional unit. It is noted that for the embodiment of Figure 1, each decode unit 208A-208F is associated with a dedicated reservation station unit 210A-210F, and that each reservation station unit 210A-210F is similarly associated with a dedicated functional unit 212A-212F. Accordingly, six dedicated "issue positions" are formed by decode units 208, reservation station units 210 and functional units 212. Instructions aligned and dispatched to issue position 0 through decode unit 208A are passed to reservation station unit 210A and subsequently to functional unit 212A for execution. Similarly, instructions aligned and dispatched to decode unit 208B are passed to reservation station unit 210B and into functional unit 212B, and so on.

Upon decode of a particular instruction, if a required operand is a register location, register address information is routed to reorder buffer 216 and register file 218 simultaneously. Those of skill in the art will appreciate that the x86 register file includes eight 32 bit real registers (i.e., typically referred to as EAX, EBX, ECX, EDX, EBP, ESI, EDI and ESP), as will be described further below. Reorder buffer 216 contains temporary storage locations for results which change the contents of these registers to thereby allow out of order execution. A temporary storage location of reorder buffer 216 is reserved for each instruction which, upon decode, modifies the contents of one of the real registers. Therefore, at various points during execution of a particular program, reorder buffer 216 may have one or more locations which contain the speculatively executed contents of a given register. If following decode of a given instruction it is determined that reorder buffer 216 has previous location(s) assigned to a register used as an operand in the given instruction, the reorder buffer 216 forwards to the corresponding reservation station either: 1) the value in the most recently assigned location, or 2) a tag for the most recently assigned location if the value has not yet been produced by the functional unit that will eventually execute the previous instruction. If the reorder buffer has a location reserved for a given register, the operand value (or tag) is provided from reorder buffer 216 rather than from register file 218. If there is no location reserved for a required register in reorder buffer 216, the value is taken directly from register file 218. If the operand corresponds to a memory location, the operand value is provided to the reservation station unit through load/store unit 222.

Details regarding suitable reorder buffer implementations may be found within the publication "Superscalar Microprocessor Design" by Mike Johnson, Prentice-Hall, Englewood Cliffs, New Jersey, 1991, and within the co-pending, commonly assigned patent application entitled "High Performance Superscalar Microprocessor", Serial No. 08/146,382, filed October 29, 1993 by Witt, et al. These documents are incorporated herein by reference in their entirety.

Reservation station units 210A-210F are provided to temporarily store instruction information to be speculatively executed by the corresponding functional units 212A-212F. As stated previously, each reservation station unit 210A-210F may store instruction information for up to three pending instructions. Each of the six reservation stations 210A-210F contain locations to store bit-encoded execution instructions to be speculatively executed by the corresponding functional unit and the values of operands. If a particular operand is not available, a tag for that operand is provided from reorder buffer 216 and is stored within the corresponding reservation station until the result has been generated (i.e., by completion of the execution of a previous instruction). It is noted that when an instruction is executed by one of the functional units 212A-212F, the result of that instruction is passed directly to any reservation station units 210A-210F that are waiting for that result at the same time the result is passed to update reorder buffer 216 (this technique is commonly referred to as "result forwarding"). Instructions are issued to functional units for execution after the values of any required operand(s) are made available. That is, if an operand associated with a pending instruction within one of the reservation station units 210A-210F has been tagged with a location of a previous result value within reorder buffer 216 which corresponds to an instruction which modifies the required operand, the instruction is not issued to the corresponding functional unit 212 until the operand result for the previous instruction has been obtained. Accordingly, the order in which instructions are executed may not be the same as the order of the original program instruction sequence. Reorder buffer 216 ensures that data coherency is maintained in situations where read-after-write dependencies occur.

In one embodiment, each of the functional units 212 is configured to perform integer arithmetic operations of addition and subtraction, as well as shifts, rotates, logical operations, and branch operations. It is noted that a floating point unit (not shown) may also be employed to accommodate floating point operations.

Each of the functional units 212 also provides information regarding the execution of conditional branch instructions to the branch prediction unit 220. If a branch prediction was incorrect, branch prediction unit 220 flushes instructions subsequent to the mispredicted branch that have entered the instruction processing pipeline, and causes prefetch/predecode unit 202 to fetch the required instructions from instruction cache 204 or main memory. It is noted that in such situations, results of instructions in the original program sequence which occur after the mispredicted branch instruction are discarded, including those which were speculatively executed and temporarily stored in load/store unit 222 and reorder buffer 216. Exemplary configurations of suitable branch prediction mechanisms are well known. More specific details regarding communication between functional units 212 and branch prediction unit 220 are provided below.

Results produced by functional units 212 are sent to the reorder buffer 216 if a register value is being updated, and to the load/store unit 222 if the contents of a memory location is changed. If the result is to be stored in a register, the reorder buffer 216 stores the result in the location reserved for the value of the register when the instruction was decoded. As stated previously, results are also broadcast to reservation station units 210A-210F where pending instructions may be waiting for the results of previous instruction executions to obtain the required operand values.

Data cache 224 is a high speed cache memory provided to temporarily store data being transferred between load/store unit 222 and the main memory subsystem. In one embodiment, data cache 224 has a capacity of storing up to eight kilobytes of data. It is understood that data cache 224 may be implemented in a variety of specific memory configurations, including a set associative configuration.

Generally speaking, load/store unit 222 provides an interface between functional units 212A-212F and data cache 224. In one embodiment, load/store unit 222 is configured with a load/store buffer with sixteen storage locations for data and address information for pending load or store memory operations. Functional units 212 arbitrate for access to the load/store unit 222. The load/store unit 222 also performs dependency checking for load memory operations against pending store memory operations to ensure that data coherency is maintained.

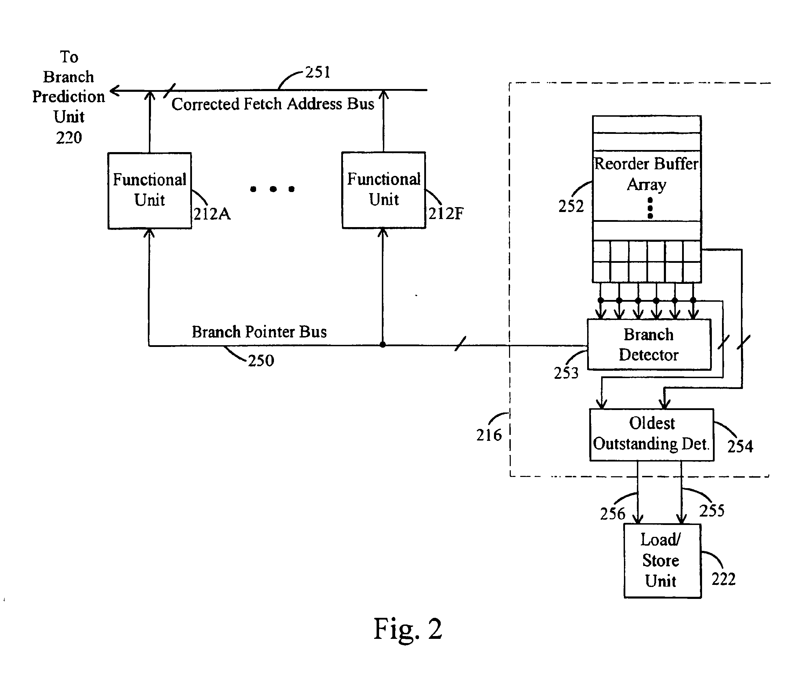

Turning now to Figure 2, a block diagram depicting functional units 212, reorder buffer 216, and load/store unit 222 is shown. Figure 2 details the connections between the depicted units, and shows reorder buffer 216 in more detail as well. Although two functional units (212A and 212F) are shown, similar connections are made to each of the remaining functional units 212. Reorder buffer 216 conveys a branch pointer to functional units 212 on a branch pointer bus 250. Functional units 212 are also connected to a corrected fetch address bus 251, which conveys an address to branch prediction unit 220. Reorder buffer 216 conveys a pair of oldest pointers (i.e. an oldest pointer and a second-oldest pointer) on a pair of oldest pointer buses 255 and 256 to load/store unit 222. When used in the context of an instruction, the term "oldest" means an instruction in the reorder buffer which does not yet have valid results, but each prior instruction within the reorder buffer does have valid results.

Generally speaking, the branch pointer conveyed by reorder buffer 216 on branch pointer bus 250 identifies the oldest branch instruction currently stored within reorder buffer 216. Functional units 212 compare the branch pointer to the pointer identifying the instruction currently executing. If the comparison indicates a match, then the associated functional unit may transfer its corrected fetch address on corrected fetch address bus 251 to branch prediction unit 220. The functional unit conveys a corrected fetch address if the associated branch instruction was mispredicted by branch prediction unit 220. The oldest pointers conveyed on oldest pointer buses 255 and 256 identify the oldest instructions that are not in condition for retirement. Load/store unit 222 compares the oldest pointers to the pointers identifying outstanding load miss and store instructions stored within a load/store buffer within load/store unit 222. If the comparison indicates a match, then the corresponding load or store instruction is performed by transferring the associated memory locations into the cache (if necessary), and storing the data associated with store instructions into the data cache or forwarding the data associated with load instructions to the target register. Thus, a mechanism for branch prediction recovery and a mechanism for performing load instructions that are data cache misses and store instructions in program order is created. An instruction is determined to be "in condition for retirement" if the results of executing the instruction have been transferred to reorder buffer 216. The term "retirement" refers to removing an instruction from reorder buffer 216.

The branch pointer is generated by reorder buffer 216 using a branch detector circuit 253. Branch detector circuit 253 scans a certain number of entries storing the oldest instructions in a reorder buffer array 252. In one embodiment, the number of entries scanned is six. Reorder buffer array 252 is configured to store information pertaining to instructions that are currently outstanding in superscalar microprocessor 200 (i.e. instructions that have been dispatched and are not yet in condition for retirement), as described with respect to Figure 1 above. A "reorder buffer tag" (which uniquely identifies an instruction within reorder buffer 216) associated with the oldest branch instruction within the oldest six entries in reorder buffer array 252 is selected by branch detector circuit 253 and conveyed as the branch pointer. Therefore, the branch pointer in this embodiment is a reorder buffer tag.

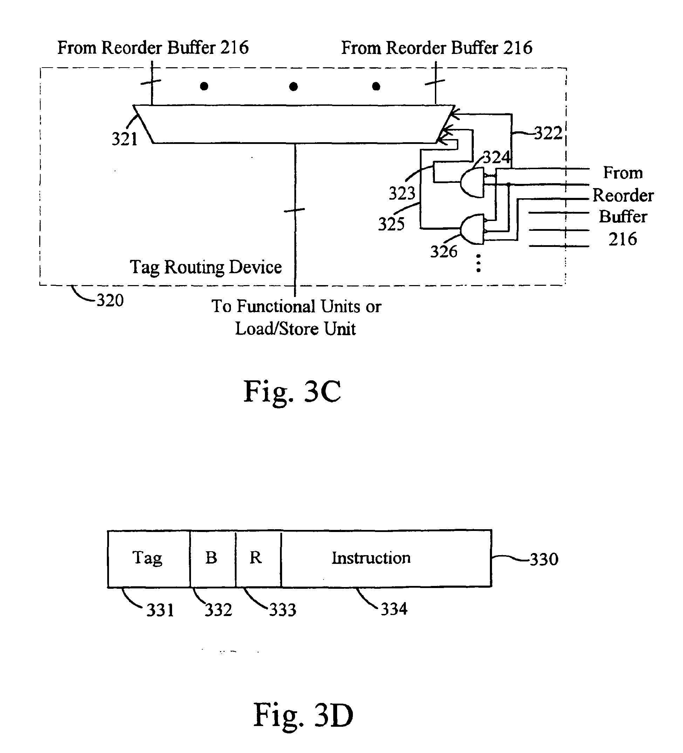

In this embodiment, branch detector circuit 253 employs one tag routing device. The tag routing device will be explained in more detail with respect to Figure 3C, but generally speaking it selects a reorder buffer tag from multiple entries of reorder buffer array 252 dependent on a bit associated with each entry. In the case of branch detector circuit 253, the bit identifies the instruction as a branch. If the oldest entry is a branch, its associated reorder buffer tag is routed to functional units 212. Similarly, if the second oldest entry is a branch and the oldest entry is not a branch, the second oldest entry's tag is routed to functional units 212, and so on for the four remaining reorder buffer entries being scanned. If no branch instruction is found within the entries scanned by branch detector circuit 253, an invalid tag is routed to functional units 212.

The pair of oldest pointers conveyed on oldest pointer buses 255 and 256 are generated by an oldest outstanding detector circuit 254 (hereinafter referred to as detector circuit 254). Similar to branch detector circuit 253, detector circuit 254 scans a certain number of entries storing the oldest instructions within reorder buffer 216. The reorder buffer tags associated with the oldest and second oldest instructions that are not in condition for retirement are routed to load/store unit 222 by detector circuit 254. In one implementation, the number of reorder buffer entries scanned is twelve.

In one embodiment, detector circuit 254 contains two tag routing devices, as will be described with respect to Figure 3C. The first tag routing device routes a reorder buffer tag similar to the tag routing device of branch detector circuit 253, except that the bit from reorder buffer array 252 used to select the reorder buffer tag indicates that the associated instruction is not in condition for retirement. The second tag routing device is configured to route the second oldest reorder buffer tag associated with an instruction that is not in condition for retirement. Therefore, the selection bit provided to the second tag routing device is the logical AND of the bit that indicates an instruction is not in condition for retirement and a bit indicating that the instruction is not selected by the first tag routing device. The selection bits are priority encoded by the tag routing device, as will be explained with respect to Figure 3C.

In this embodiment, load/store unit 222 is required to return the data associated with a load instruction to the reorder buffer, and is required to indicate to the reorder buffer that a store has been performed. Load instructions that hit in the data cache transfer the associated data to the reorder buffer, and are thereby completed. However, load instructions that miss the data cache (and so cannot return data) as well as store instructions remain in the load/store buffer until their associated reorder buffer tag is indicated on one of the oldest pointers. Then, the load/store unit may select the load miss instruction to transfer data into the data cache from main memory or the store instruction to store data into the data cache. When the load/store unit has performed these actions, it returns the data or indicates that the store is complete (respectively). In a subsequent clock cycle, the oldest pointers will move to the next oldest instructions in reorder buffer 216. Load instructions that miss the data cache and store instructions are therefore executed in order.

In another embodiment, branch pointer bus 250 and oldest outstanding bus 255 are operated such that they convey the same pointer in each clock cycle. Therefore, branch pointer bus 250 and oldest outstanding bus 255 can be combined into a common bus for this embodiment, and branch detector circuit 253 can be eliminated. As will be explained below, functional units 212 generate valid corrected fetch addresses when executing branch instructions and invalid corrected fetch addresses otherwise. Therefore, if branch pointer bus 250 conveys a non-branch instruction and the pointer matches the pointer identifying an instruction currently being executed, branch prediction unit 220 will receive an invalid corrected fetch address.

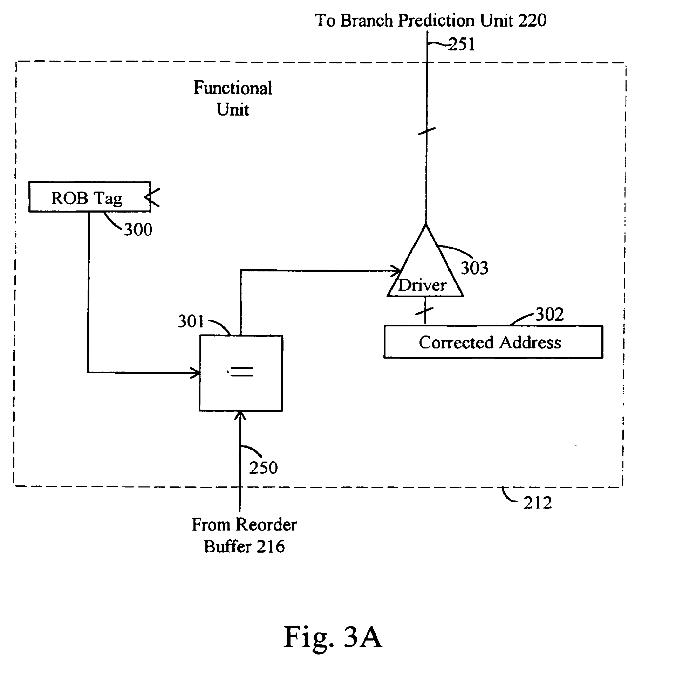

Turning now to Figure 3A, internal logic circuits of one of functional units 212 are shown. Functional units 212 are each configured with a register 300 which stores the reorder buffer tag of the instruction being executed in the current clock cycle. Register 300 is connected to a comparator circuit 301 which is also connected to branch pointer bus 250. Therefore, comparator circuit 301 compares the branch pointer conveyed on branch pointer bus 250 to the reorder buffer tag stored in register 300. Because branch pointer bus 250 conveys a valid reorder buffer tag only if the associated instruction is a branch, the comparator output indicates a match in clock cycles where a branch instruction is being executed by the functional unit. The output of comparator 301 is coupled to the enable of a tri-state driver circuit 303. Tri-state driver circuit 303 is coupled to a corrected address logic block 302 which is configured to generate a corrected fetch address if the branch instruction being executed is a mispredicted branch, and an invalid address if the branch is predicted correctly or the instruction is not a branch. Tri-state driver circuit conveys the address produced by corrected address logic block 302 if comparator circuit 301 indicates a match, and conveys nothing if comparator circuit 301 does not indicate a match. Therefore, multiple functional units 212 may be connected to the same corrected fetch address bus 251 because only one functional unit can contain a reorder buffer tag which matches the pointer conveyed on pointer bus 250 in a given clock cycle. Branch prediction unit 220 is configured to recognize an invalid address such that corrected fetch addresses are acted upon and invalid addresses are ignored. It is noted that functional units 212 report the results of executing a branch instruction to reorder buffer 216, as is the case with other instructions.

By employing functional units 212 in a superscalar microprocessor, a mechanism for branch misprediction recovery may be implemented that requires relatively few clock cycles to complete. The clock cycle in which a branch is executed and found to be mispredicted is the cycle in which the corrected fetch address is conveyed to branch prediction unit 220. In the following clock cycle, the corrected fetch address will access the instruction cache and the associated instructions will be dispatched. Furthermore, the branch misprediction recovery mechanism handles multiple branch predictions by conveying the corrected fetch address associated with the oldest branch instruction.

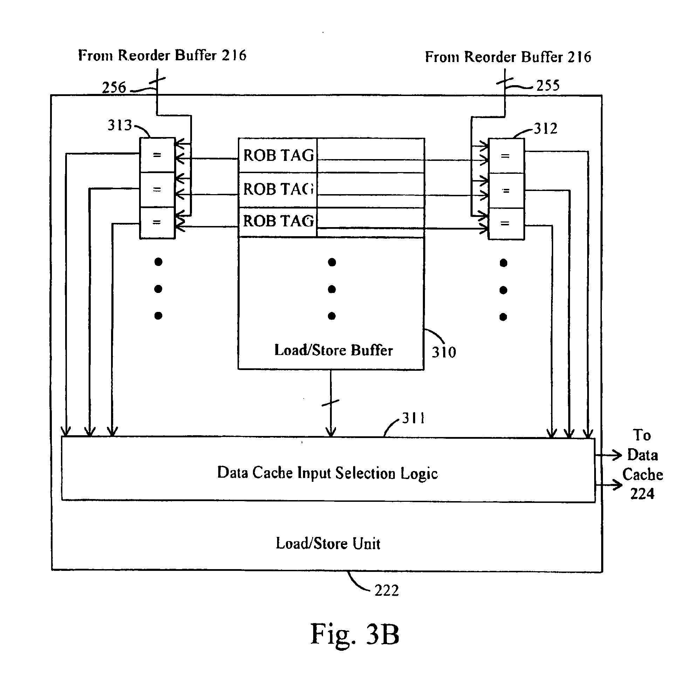

Turning now to Figure 3B, load/store unit 222 is depicted in more detail. Load/store unit 222 receives oldest pointer buses 255 and 256 from reorder buffer 216. and selects load or store instructions to access data cache 224. In one embodiment, load/store unit 222 selects up to two load/store instructions to access the data cache in each clock cycle. Load/store unit 222 is configured with a load/store buffer 310 which is configured to store information regarding outstanding load and store instructions. Included in the information stored within load/store buffer 310 is the reorder buffer tag for each instruction, as indicated in Figure 3B. The reorder buffer tag for each entry is compared to the oldest pointers using comparator circuits 312 and 313. A data cache input selection logic block 311 (hereinafter referred to as selection logic block 311) receives the comparator outputs as well as the contents ot load/store buffer 310 and generates up to two requests for data cache 224. Selection logic block 311 does not select a load instruction that has been determined to miss the data cache unless the associated comparator circuits indicate a match with the oldest pointers. Similarly, selection logic block 311 does not select a store instruction unless the associated comparator circuits indicate a match with the oldest pointers. In one embodiment, selection logic block 311 employs a priority scheme for selecting instructions to access data cache 224. The highest priority is assigned to a load miss or store instruction with a reorder buffer tag which matches the oldest pointer transferred on oldest pointer bus 255. An intermediate priority is assigned to a load miss or store instruction that has a reorder buffer tag which matches the oldest pointer transferred on oldest pointer bus 256. Lowest priority is assigned to load instructions that have not yet accessed data cache 224.

By employing load/store unit 222 in a superscalar microprocessor which produces the oldest pointers, load instructions that miss data cache 224 and store instructions are executed in order. Neither of the two types of instructions are allowed to access data cache 224 or the main memory subsystem until their reorder buffer tags are conveyed on the oldest pointers, indicating that they are the oldest outstanding instructions that are not in condition for retirement. Therefore, each of the instructions prior to the load or store instruction has completed, and the load or store instruction may be executed.

Turning now to Figure 3C, an embodiment of tag routing device 320 employed within branch detection circuit 253 (shown in Figure 2) and oldest outstanding detector circuit 254 (shown in Figure 2) is shown. Tag routing device 320 includes a multiplexor 321 which receives reorder buffer tags from reorder buffer array 252. Associated with each reorder buffer tag is a signal conveying a logical one if the tag should be considered for routing by tag routing device 320. The embodiment shown in Figure 3C is a priority encoded mechanism which selects the oldest tag if its associated signal is a logical one, as indicated by signal line 322 connected to multiplexor 321. The encoding mechanism selects the second oldest tag if its associated signal conveys a logical one and the signal associated with the oldest tag conveys a logical zero. Therefore, signal line 323 (which selects the second oldest tag) is generated by AND gate 324. If both the signal associated with the oldest tag and the signal associated with the second oldest tag convey a logical zero and the signal associated with the third oldest tag conveys a logical one, then the third oldest tag is selected. Therefore, signal line 325 (which selects the third oldest tag) is generated by AND gate 326. Additional select signals for multiplexor 321 are generated similarly.

Turning now to Figure 3D, an exemplary reorder buffer entry 330 for reorder buffer array 252 is shown. Tag entry 330 has four fields: a reorder buffer tag field 331, a branch bit 332, a retire bit 333, and an instruction field 334. Instruction field 334 contains the instruction for this reorder buffer entry along with other data a particular embodiment of reorder buffer 216 may require. Reorder buffer tag field 331 stores the reorder buffer tag, and is connected to branch detector circuit 253 and oldest outstanding detector circuit 254 for reorder buffer array entries that are configured to contain the oldest instructions in the array. Branch bit 332 stores a logical one if the instruction stored in reorder buffer entry is a branch instruction, and a logical zero otherwise. Branch bit 332 forms one of the select signals for the tag routing device of branch detector circuit 253. Retire bit 333 stores a logical one when the instruction stored in reorder buffer array entry 330 is in condition for retirement, and a logical zero otherwise. An inversion of retire bit 333 is used to form one of the select signals for tag routing devices 320 within oldest outstanding detection circuit 254.

In yet another embodiment, each of the functional units 212 communicate the results of the comparisons to the branch pointer as well as whether or not they are executing a branch instruction which is mispredicted in the clock cycle to each of the other functional units 212. If no march to the branch pointer is detered among the functional units 212, then a priority scheme is invoked. The priority scheme selects a functional unit to drive corrected address bus 251 as follows: functional unit 212A will drive corrected fetch address bus 251 if it contains a mispredicted branch instruction; functional unit 212B will drive corrected fetch address bus 251 if it contains a mispredicted branch instruction and functional unit 212A does not contain a mispredicted branch instruction; functional unit 212C will drive corrected fetch address bus 251 if it contains a mispredicted branch instruction and neither functional unit 212A not functional unit 212B contains a mispredicted branch instruction and so on for the remaining functional units. In this manner, corrected fetch address bus 251 conveys a value in each clock cycle.

It is noted that other embodiments of the present invention may vary in the number of functional units and load/store units employed. It is further noted that the number of branch pointers and oldest pointers may vary from embodiment to embodiment. Load/store unit 222 is configured with a unified load/store buffer in this embodiment. However, load/store unit 222 could be configured with multiple load/store buffers, and load and store instructions may be stored in separate buffers, in other embodiments.

In accordance with the above disclosure, a mechanism for branch misprediction recovery and load/store ordering has been described. The branch misprediction recovery mechanism requires a clock cycle to complete once the misprediction is discovered, allowing for high performance by minimizing the number of idle clock cycles due to branch misprediction. The load/store ordering mechanism allows for load/store ordering with a minimal amount of handshaking between units. The minimal handshaking lowers the number of interface signals and simplifies the design of the superscalar microprocessor.

Numerous variations and modifications will become apparent to those skilled in the art once the above disclosure is fully appreciated. It is intended that the following claims be interpreted to embrace all such variations and modifications.

## Claims

1. A superscalar microprocessor (200) comprising:
a reorder buffer (216), a branch prediction unit (220), and a plurality of functional units (212A-212F) configured to execute instructions and wherein at least one of said plurality of functional units is configured to execute branch instructions, ***characterized in that**:*
said reorder buffer is configured to generate a pointer (250) identifying an oldest outstanding branch instruction; and
said plurality of functional units are coupled to said reorder buffer and said branch prediction unit,
wherein each of said plurality of functional units is configured to receive said pointer, and wherein said each of said plurality of functional units is configured to convey a corrected fetch address (251) to said branch prediction unit responsive to said pointer.

2. The superscalar microprocessor as recited in claim 1 wherein said pointer is common to each of said plurality of functional units.

3. The superscalar microprocessor as recited in claim 2 wherein said plurality of functional units are configured to execute a plurality of branch instructions in a clock cycle, and wherein each of said plurality of branch instructions are executed in a separate one of said plurality of functional units.

4. The superscalar microprocessor as recited in claim 2 wherein each one of said functional units is further configured to generate a corrected fetch address at a time when said branch instruction being executed by said one of said functional units is mispredicted.

5. The superscalar microprocessor as recited in claim 4 wherein said pointer conveys a reorder buffer tag.

6. The superscalar microprocessor as recited in claim 5 wherein each one of said plurality of functional units are further configured with a reorder buffer tag associated with said instruction being executed by said one of said plurality of functional units, and wherein each one of said plurality of functional units are further configured to compare said reorder buffer tag associated with said instruction being executed by said one of said plurality of functional units to said reorder buffer tag conveyed on said pointer.

7. The superscalar microprocessor as recited in claim 6 wherein each one of said plurality of functional units are further configured to convey said corrected fetch address at a time when said reorder buffer tag associated with said instruction being executed by said one of said plurality of functional units compares equal to said reorder buffer tag conveyed on said pointer.

8. The superscalar microprocessor as recited in claim 7 wherein each one of said plurality of functional units is configured to signal said reorder buffer during a clock cycle in which a branch instruction being executed by said one of said plurality of functional units is determined to be correctly predicted.

9. The superscalar microprocessor as recited in claim 8 wherein said plurality of functional units are further configured to employ a priority system to determine which one of said plurality of functional units conveys said corrected fetch address, wherein said priority system comprises a first of said plurality of functional units as highest priority, and wherein said priority system further comprises a second of said plurality of functional units as second highest priority.

10. The superscalar microprocessor as recited in claim 1 further comprising a load/store unit (222) coupled to said functional units, wherein said load/store unit is configured to execute load and store instructions, and wherein said load/store unit is further configured to receive said pointer, and wherein said pointer is further configured to identify an oldest outstanding store instruction.

11. The superscalar microprocessor as recited in claim 10 wherein said pointer is configured to identify an instruction which is not in condition for retirement.

12. The superscalar microprocessor as recited in claim 11 further comprising a data cache (224) coupled to said load/store unit wherein said load/store unit is further configured to store a datum associated with a store instruction into said data cache during a clock cycle in which said pointer identifies said store instruction.

13. The superscalar microprocessor as recited in claim 11 further comprising a data cache (224) coupled to said load/store unit wherein said load/store unit is further configured to cause a memory location to be transferred into said data cache, and wherein said memory location is associated with a load instruction which misses said data cache, and wherein said memory location is caused to be transferred during a clock cycle in which said pointer identifies said load instruction.

## Patentansprüche

1. Superskalarer Mikroprozessor (200) mit:
einem Umordnungspuffer (216), einer Verzweigungsvorhersageeinheit (220) und mehreren Funktionseinheiten (212A bis 212F), die ausgebildet sind, Befehle auszuführen, wobei mindestens eine der mehreren Funktionseinheiten ausgebildet ist, Verzweigungsbefehle auszuführen, **dadurch gekennzeichnet, dass**:
der Umordnungspuffer ausgebildet ist, einen Zeiger (250) zu erzeugen, der einen ältesten nicht abgeschlossenen Verzweigungsbefehl kennzeichnet; und
die mehreren Funktionseinheiten mit dem Umordnungspuffer und der Verzweigungsvorhersageeinheit verbunden sind, wobei jede der mehreren Funktionseinheiten ausgebildet ist, den Zeiger zu empfangen, und wobei jede der mehreren Funktionseinheiten ausgebildet ist, eine korrigierte Abholadresse (251) an die Verzweigungsvorhersageeinheit in Reaktion auf den Zeiger zu übermitteln.

2. Superskalarer Mikroprozessor nach Anspruch 1, wobei der Zeiger für jede der mehreren Funktionseinheiten ein gemeinsamer Zeiger ist.

3. Superskalarer Mikroprozessor nach Anspruch 2, wobei die mehreren Funktionseinheiten ausgebildet sind, mehrere Verzweigungsbefehle in einem Taktzyklus auszuführen, und wobei jeder der mehreren Verzweigungsbefehle in einer separaten Einheit der mehreren Funktionseinheiten ausgeführt wird.

4. Superskalarer Mikroprozessor nach Anspruch 2, wobei jede der Funktionseinheiten ferner ausgebildet ist, eine korrigierte Abholadresse zu einem Zeitpunkt zu erzeugen, wenn der von der einen der Funktionseinheiten ausgeführte Verzweigungsbefehl falsch vorhergesagt ist.

5. Superskalarer Mikroprozessor nach Anspruch 4, wobei der Zeiger eine Umordnungspuffermarkierung übermittelt.

6. Superskalarer Mikroprozessor nach Anspruch 5, wobei jede der mehreren Funktionseinheiten mit einer Umordnungspuffermarkierung versehen ist, die mit dem von der einen der mehreren Funktionseinheiten ausgeführten Befehl verknüpft ist, und wobei jede der mehreren Funktionseinheiten ferner ausgebildet ist, die Umordnungspuffermarkierung, die mit dem einen, von der einen der mehreren Funktionseinheiten ausgeführten Befehl verknüpft ist, mit der Umordnungspuffermarkierung, die von dem Zeiger übermittelt wird, zu vergleichen.

7. Superskalarer Mikroprozessor nach Anspruch 6, wobei jede der mehreren Funktionseinheiten ferner ausgebildet ist, die korrigierte Abholadresse zu einer Zeit zu übermitteln, wenn die Umordnungspuffermarkierung, die mit dem von der einen der mehreren Funktionseinheiten ausgeführten Befehl verknüpft ist, im Vergleich gleich ist zu der Umordnungspuffermarkierung, die von dem Zeiger übermittelt wird.

8. Superskalarer Mikroprozessor nach Anspruch 7, wobei jede der mehreren Funktionseinheiten ausgebildet ist, den Umordnungspuffer während eines Taktzyklus zu benachrichtigen, in welchem ein von der einen der mehreren Funktionseinheiten ausgeführter Verzweigungsbefehl als korrekt vorhergesagt bestimmt wird.

9. Superskalarer Mikroprozessor nach Anspruch 8, wobei die mehreren Funktionseinheiten ferner ausgebildet sind, ein Prioritätssystem anzuwenden, um zu bestimmen, welche der mehreren Funktionseinheiten die korrigierte Abholadresse übermittelt, wobei das Prioritätssystem eine erste der mehreren Funktionseinheiten als höchste Priorität aufweist, und wobei das Prioritätssystem ferner eine zweite der mehreren Funktionseinheiten als eine zweithöchste Priorität aufweist.

10. Superskalarer Mikroprozessor nach Anspruch 1, der ferner eine Lade/Schreib-Einheit (222) umfasst, die mit den Funktionseinheiten verbunden ist, wobei die Lade/Schreib-Einheit ausgebildet ist, Lade- und Speicherbefehle auszuführen, und wobei die Lade/Schreib-Einheit ferner ausgebildet ist, den Zeiger zu empfangen, und wobei der Zeiger ferner ausgebildet ist, einen ältesten nicht abgeschlossenen Speicherbefehl zu kennzeichnen.

11. Superskalarer Mikroprozessor nach Anspruch 10, wobei der Zeiger ausgebildet ist, einen Befehl zu kennzeichnen, der nicht in einem Zustand für das Abschließen des Befehls ist.

12. Superskalarer Mikroprozessor nach Anspruch 11, der ferner einen Datencache-Speicher (224) aufweist, der mit der Lade/Schreib-Einheit verbunden ist, wobei die Lade/Schreib-Einheit ferner ausgebildet ist, einen Datenpunkt zu speichem, der mit einem in den Daten-Speicher gerichteten Speicherbefehl während eines Taktzyklus verknüpft ist, in welchem der Zeiger den Speicherbefehl kennzeichnet.

13. Superskalarer Mikroprozessor nach Anspruch 11, der ferner einen Datencache-Speicher (224) umfasst, der mit der Lade/Schreib-Einheit verbunden ist, wobei die Lade/Schreib-Einheit ferner ausgebildet ist zu veranlassen, dass ein Speicherplatz in den Datencache-Speicher übertragen wird, und wobei der Speicherplatz mit einem Speicherbefehl verknüpft ist, der nicht den Datencache-Speicher trifft, und wobei der Speicherplatz während eines Taktzyklusses übertragen wird, in welchem der Zeiger den Ladebefehl kennzeichnet.

## Revendications

1. Microprocesseur superscalaire (200) comprenant :
un tampon de réordonnancement (216), une unité de prédiction de branche (220), et une pluralité d'unités fonctionnelles (212A à 212F) configurées pour exécuter des instructions et dans lequel au moins une de ladite pluralité d'unités fonctionnelles est configurée pour exécuter des instructions de branche, **caractérisé en ce que** :
- ledit tampon de réordonnancement est configuré pour produire un pointeur (250) identifiant une instruction de branche remarquable la plus ancienne ; et
- ladite pluralité d'unités fonctionnelles est couplée audit tampon de réordonnancement et à ladite unité de prédiction de branche, dans lequel chacune de ladite pluralité d'unités fonctionnelles est configurée pour recevoir ledit pointeur, et dans lequel ladite chacune de ladite pluralité d'unités fonctionnelles est configurée pour transmettre une adresse d'extraction corrigée (251) à ladite unité de prédiction de branche en réponse au dit pointeur.

2. Microprocesseur superscalaire selon la revendication 1, dans lequel ledit pointeur est commun à chacune de ladite pluralité d'unités fonctionnelles.

3. Microprocesseur superscalaire selon la revendication 2, dans lequel ladite pluralité d'unités fonctionnelles est configurée pour exécuter une pluralité d'instructions de branche pendant un cycle d'horloge et dans lequel chacune de ladite pluralité d'instructions de branche est exécutée dans une unité fonctionnelle séparée de ladite pluralité d'unités fonctionnelles.

4. Microprocesseur superscalaire selon la revendication 2, dans lequel chacune desdites unités fonctionnelles est en outre configurée pour produire une adresse d'extraction corrigée lorsque la prédiction de ladite instruction de branche exécutée par ladite une desdites unités fonctionnelles est erronée.

5. Microprocesseur superscalaire selon la revendication 4, dans lequel ledit pointeur transmet une étiquette de tampon de réordonnancement.

6. Microprocesseur superscalaire selon la revendication 5, dans lequel chacune de ladite pluralité d'unités est en outre configurée avec une étiquette de tampon de réordonnancement associée à ladite instruction exécutée par ladite une de ladite pluralité d'unités fonctionnelles et dans lequel chacune de ladite pluralité d'unités est en outre configurée pour comparer ladite étiquette de tampon de réordonnancement associée à ladite instruction exécutée par ladite une de ladite pluralité d'unités fonctionnelles avec ladite étiquette de tampon de réordonnancement transmise par ledit pointeur.

7. Microprocesseur superscalaire selon la revendication 6, dans lequel chacune de ladite pluralité d'unités est en outre configurée pour transmettre ladite adresse d'extraction corrigée lorsque ladite étiquette de tampon de réordonnancement associée à ladite instruction exécutée par ladite une de ladite pluralité d'unités fonctionnelles est identique à ladite étiquette de tampon de réordonnancement transmise par ledit pointeur.

8. Microprocesseur superscalaire selon la revendication 7, dans lequel chacune de ladite pluralité d'unités fonctionnelles est configurée pour transmettre un signal au dit tampon de réordonnancement pendant un cycle d'horloge dans lequel une instruction de branche exécutée par ladite une de ladite pluralité d'unités fonctionnelles est déterminée comme étant correctement prédite.

9. Microprocesseur superscalaire selon la revendication 8, dans lequel ladite pluralité d'unités fonctionnelles sont en outre configurées pour utiliser un système de priorités pour déterminer laquelle de ladite pluralité d'unités fonctionnelles transmet ladite adresse d'extraction corrigée, dans lequel ledit système de priorités comprend une première de ladite pluralité d'unités fonctionnelles en tant que priorité la plus élevée et dans lequel ledit système de priorités comprend en outre une deuxième de ladite pluralité d'unités fonctionnelles en tant que deuxième priorité la plus élevée.

10. Microprocesseur superscalaire selon la revendication 1, comprenant en outre une unité de chargement/mémorisation (222) couplée auxdites unités fonctionnelles, dans lequel ladite unité de chargement/mémorisation est configurée pour exécuter des instructions de chargement et de mémorisation et dans lequel ladite unité de chargement/mémorisation est en outre configurée pour recevoir ledit pointeur, et dans lequel ledit pointeur est en outre configuré pour identifier une instruction de mémorisation la plus ancienne.

11. Microprocesseur superscalaire selon la revendication 10, dans lequel ledit pointeur est configuré pour identifier une instruction qui n'est pas en état d'être retirée.

12. Microprocesseur superscalaire selon la revendication 11, comprenant en outre un cache de données (224) couplé à ladite unité de chargement/mémorisation dans lequel ladite unité de chargement/mémorisation est en outre configurée pour mémoriser une donnée associée à une instruction de mémorisation dans ledit cache de données pendant un cycle d'horloge au cours duquel ledit pointeur identifie ladite instruction de mémorisation.

13. Microprocesseur superscalaire selon la revendication 11, comprenant en outre un cache de données (224) couplé à ladite unité de chargement/mémorisation dans lequel ladite unité de chargement/mémorisation est en outre configurée pour entraîner le transfert d'un emplacement de mémoire dans ledit cache de données et dans lequel ledit emplacement de mémoire est associé à une instruction de chargement à laquelle manque ledit cache de données, et dans lequel le transfert dudit emplacement de mémoire est provoqué pendant un cycle d'horloge au cours duquel ledit pointeur identifie ladite instruction de chargement.
